# EUROPEAN PATENT SPECIFICATION

(11) **EP 2 747 919 B1**
(45) Date of publication and mention of the grant of the patent: **14.06.2017**
(21) Application number: 12753085.5
(22) Date of filing: 07.08.2012
(51) Int. Cl.: C22B 7/04, C21B 3/08

(54) **SLAG GRANULATION DEVICE**
SCHLACKENGRANULIERUNGSVORRICHTUNG
DISPOSITIF DE GRANULATION DE SCORIE

(30) Priority: 26.08.2011 GB 201114763; 08.03.2012 GB 201204069
(43) Date of publication of application: 02.07.2014
(73) Proprietor: Primetals Technologies, Limited, London EC1A 2DY (GB)
(72) Inventor: FEATHERSTONE, William Barry, Guisborough Yorkshire TS14 8HZ (GB)
(74) Representative: Metals@Linz
(86) International application number: PCT/EP2012/065412
(87) International publication number: WO 2013/029933

(56) References cited:
- WO-A2-2011/147630
- JP-A- 53 088 687
- US-A- 4 153 440

## Description

This invention relates to a dry slag granulation device, in particular for dry slag granulation using a rotary atomising granulator to obtain granulated glassy slag.

A method of granulation of molten slag using air jets to break up slag ejected from a rotating flat disk or cup is described in GB2148330. Typically, for slag granulation, the flat disk or cup is made from some type of refractory ceramic material, such as a high alumina refractory ceramic, or ceramic refractory with chromium additions.

However, it has been found that as slag flow rates increase, from a low slag flow rate of typically between 1 and 100 Kg/min to high flow rates of about 3 to 6 tonnes per minute, as required in a typical blast furnace, then the flat refractory disk becomes inadequate, unable to cope with the increased flow rates, even if the diameter of the flat disk is increased. Although atomisation can be improved by use of the refractory cup for higher flow rates, the edges of the cup rapidly become worn, as does any metal protective shell that is provided and the cup is ground down to a flat disk shape too.

The technology for dry slag granulation is still in development and the problem has not been addressed up to now.

In accordance with a first aspect of the present invention, a dry slag rotary atomising granulator comprises a rotatable disk mounted on a support for rotation about an axis of rotation, wherein the disk comprises a metal; wherein the granulator further comprises a cooling system for supplying a coolant to the disk; wherein the disk comprises a first surface to receive slag and a second surface remote from the slag receiving surface for receiving coolant; and wherein the disk further comprises terracing on the first surface; and a layer of solidified slag formed on the first surface.

The disk comprises a metal disk with terracing on its surface remote from the coolant, the terracing helping to keep in place a layer of solidified slag which is formed on the surface of the disk and the terracing in order to provide protection for the metal dish from the impact of the high temperature slag. The present invention addresses the problems of needing to operate at higher slag flow rates for which conventional flat or dish shaped ceramic disks are unsuitable

A device with a multitude of such conventional flat disks is shown in JP53088687A.

Preferably, the granulator further comprises a slag supply outlet for supplying slag onto the first surface of the disk, for example an outlet of a slag runner or tundish.

A tundish allows irregularities in the flow of slag from the blast furnace to be evened out.

In one embodiment, the cooling system comprises coolant sprays directed at the second surface of the disk remote from the first surface.

The coolant sprays may be aerated liquid sprays, but preferably, the coolant sprays comprise water sprays.

Alternatively, the cooling system comprises a flowing coolant system.

Preferably, the granulator further comprises a housing, the housing comprising a cylinder coupled to an annular disk and mounted relative to the second surface, such that the cylinder and annular disk form an annular passage for containing a flow of coolant.

Preferably, the granulator further comprises a sump.

Any suitable coolant may be used, but preferably, the coolant comprises water.

This has the advantages of relatively low cost, ease of supply and storage.

Although a substantially flat disk with terracing could be used, preferably, the first surface of the disk is concave.

For a concave disk, preferably, an extension of a chord between two points on the circumference of the disk, the chord passing through the axis of rotation, forms an acute angle with a tangent of the disk surface at the edge of the disk pointing towards the axis of rotation.

Preferably, the acute angle is between 30° and 50°.

More preferably, the acute angle is 40°.

In accordance with a second aspect of the present invention, a method of operating a dry slag rotary atomising granulator comprising a rotatable disk mounted on a support for rotation about an axis of rotation, wherein the disk comprises a metal; wherein the disk further comprises terracing on the first surface; and wherein the granulator further comprises a cooling system for supplying a coolant to the disk; the method comprising supplying slag to a first surface of the disk; supplying coolant to a second surface of the disk, remote from the slag receiving first surface; forming a layer of solidified slag on the first surface; and continuing to supply slag to the first surface for atomising.

Preferably, the method further comprises causing coolant to exit the annular passage at the circumference of the disk; and collecting the coolant in a sump.

An example of a slag granulation device and a rotatable disk will now be described with reference to the accompanying drawings in which:
Figure 1 shows a first embodiment of a slag granulation device, with a cup shaped disk;
Figure 2 shows an alternative to the device of Fig.1, with a flat disk;
Figure 3 shows a second embodiment of a slag granulation device, with spray cooling;
Figure 4 shows a third embodiment of a slag granulation device with flow cooling;
Figure 5 illustrates the example of the second embodiment, with terracing in accordance with the present invention;
Figure 6 illustrates the example of the third embodiment, with terracing in accordance with the present invention;
Figure 7 illustrates the build up of a slag layer on the example of Fig. 3, when in use, in accordance with the present invention; and,
Figure 8 illustrates the build up of a slag layer on the example of Fig.5, when in use, in accordance with the present invention.

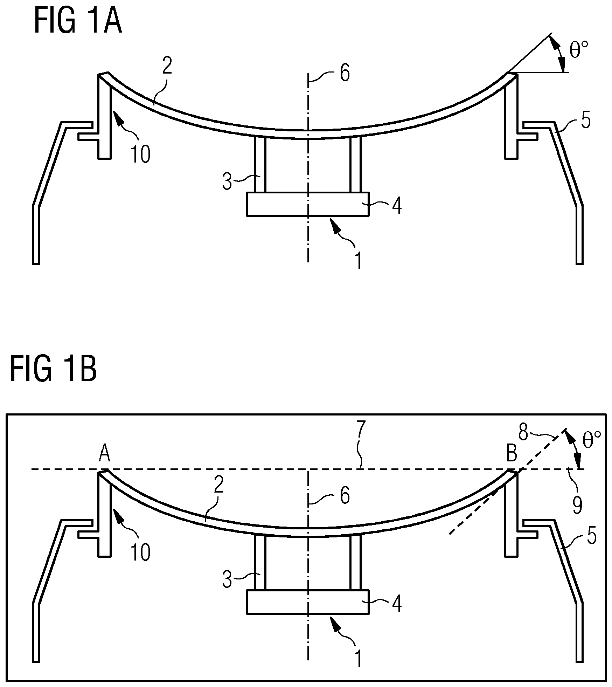

The example of Fig.1a shows a rotary atomising granulator 1 having a cup or dish shaped disk 2 mounted on a support 3 for rotation about an axis of rotation 6, the support being attached to a rotatable base 4. The disk 2 has sidewalls 10 and rotates within a shroud 5. The rotatable base 4 is connected to a variable speed drive shaft (not shown). The rotating disk 2 is typically formed in section as the segment of a circle. The radius of the circle varies depending on the diameter of the disk so that the edge of the disk is inclined at a preferred angle to the horizontal. The angle θ of the disk 2 at its outermost edge is preferably chosen such that an extension 9 of a chord 7 between two points A, B on the circumference of the disk passing through the axis of rotation 6 forms an angle of between 30 and 50 degrees to a tangent 8 of the disk surface at the edge of the disk pointing towards the axis of rotation as illustrated in Fig. 1b. The preferred edge angle is 40 degrees. The diameter of the dish is chosen dependent upon the design slag flow rate and a preferred speed of rotation of the disk, which is intended to avoid slag wool generation and to produce correctly sized slag droplets.

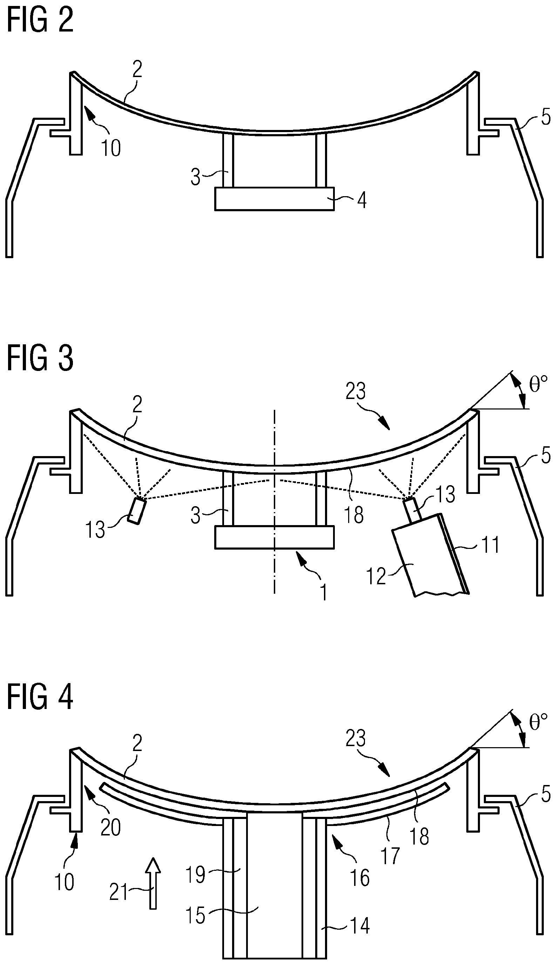

The disk is made of a metal, such as stainless steel, typically 310SS, or spheroidal graphite (SG) iron, or mild steel, although other suitable metals may be used. The metals need to be able to cope with the operating temperatures encountered in slag granulation and have good thermal conductivity. Fig.2 illustrates an alternative design, also with a metal disk, but in this case, rather than a cup shape, the disk is substantially flat, with sidewalls 10. As mentioned before, a flat disk does not cope with high flow rates as well as a cup or dish shaped disk, but the use of metal still allows an improvement over conventional ceramic refractory flat disks.

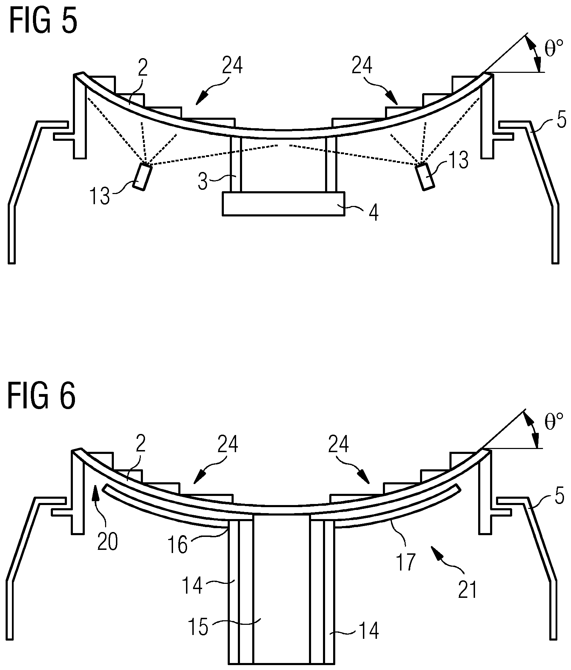

The present invention incorporates the features illustrated in Figs.3 and 4 of a metal disk 2 and a cooling mechanism for the disk, as well as the features shown in Figs 5 to 8 of terracing and a protective layer of solidified slag. The example of Fig.3 illustrates using cooling sprays and in Fig.4 using a flow of coolant. In both cases, the coolant is applied to the underside 18 of the disk 2, away from the surface 23 onto which the slag falls during operation. The examples show the disk 2 mounted on its support 3. This support may be a cylindrical support, concentric with the axis of rotation 6, attached to the base 4. However, in the embodiments where cooling by sprays is provided, the support 3 is typically a punctuated support to allow the coolant to reach the surface 18 of the disk nearer to the centre of the disk. In one example, a plurality of support columns, at least 3, preferably 4 are provided, spaced substantially equidistant from one another in contact with the disk surface 18. Thus the central part of the dish is also cooled by coolant sprays 13 as shown in Fig.3. Although, any suitable coolant could be used, water is preferred, as it is easily available, relatively inexpensive and does not require special storage conditions. In the example of Fig.3, the underside 18 of the dish is cooled by one or more water sprays 13. The rotation of the cup and application of coolant ensure a good heat transfer coefficient (HTC) to keep the metal cup within its operating range of temperature.

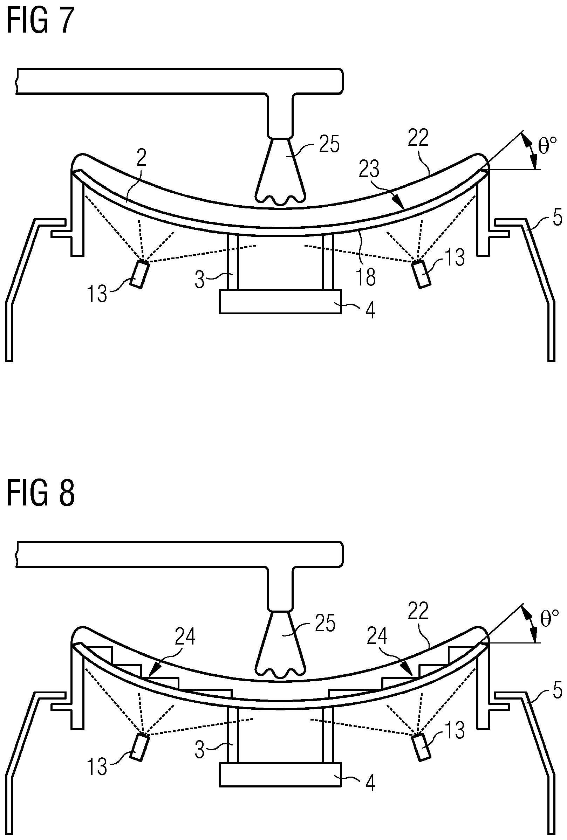

The cooling effect of the water on the underside is enhanced by the velocity of rotation. The thermal conductivity of metals such as stainless steel, spheroidal graphite (SG) iron, mild steel, low carbon steel with a carbon content of less than 0.15%, or copper are such that applying cooling to the underside 18 causes a layer 22 of solidified slag to form on the upper surface 23. Operating temperature and thermal conductivity of the metal, in combination, influence the choice of material. Copper has a lower operating temperature, but conducts heat away more quickly, leading to a thicker layer of solidified slag forming on its upper surface, so still giving sufficient protection against wear caused by the impact of the hot slag. The solidified slag layer follows the outline of the metal disk. The thickness of the solidified slag layer is such that the shape of the disk is not changed, and particularly, the shape of the disk lip is not changed. The advantage of the formation of this layer 22 is that it protects the metal surface 23 which might otherwise suffer thermal shock caused by contact with each new molten slag flow 25 landing on the surface of the disk 2. This protective layer is illustrated in Figs. 7 and 8. The slag 25 is supplied via an outlet of a slag runner or tundish (not shown) and falls substantially vertically through the outlet onto the centre of the rotating disk. Use of a tundish allows irregularities in the slag flow from the blast furnace to be evened out.

Typically, the top surface of the disk finishes at its outer edge with a 90 degree angle between that surface and the surface extending over the thickness of the dish material. The water from the water sprays is retained by the rotating side wall 10 of the disk and water thrown off the lower edge of the side wall is retained by the shroud 5 and returned to a sump (not shown). In an alternative embodiment, partially illustrated in Fig.3, the sprays 13 may be air atomised water sprays provided with an air pipe 12 and a water supply pipe 13.

In a further embodiment, shown in Fig. 4, the sprays may be replaced by a flowing fluid cooling system, again typically water cooling. In this system, the water is delivered in an annular passage 19 formed between a drive shaft 15 and a stationary pipe 14. One end 16 of the pipe is attached to a stationary dish 17 shaped with substantially similar contouring to the contours of the underside 18 of the granulating disk 2 and spaced from the underside 18 by a small amount. The water flows between the stationary dish 17 and the rotating disk 2 and discharges at the outer radius 20 into a cavity 21 below the stationary dish and is returned to the sump. This design means that there is no need for more complex sealing between the rotating dish 2 and the shroud 5. Although the rotating disk itself could be provided with internal water channels for cooling, this gives rise to problems with seals and distribution of the cooling channels, which are close together near the centre and more distributed at the edges leading to uneven cooling across the disk, so generally external sprays of flowing coolant systems are preferred.

Another problem, which may arise at high rotational speeds of operation using the water cooled design, is that the protective layer 22 of slag which forms on the upper surface 23 of the disk 2 slides away, resulting in the metal surface being subjected to thermal shock caused by contact with a new molten slag flow falling on unprotected metal. In order to address this issue and also to aid in the formation of the protective slag layer 22, the rotatable disk 2 may be provided with terracing 24 on its upper surface 23.

Examples of terracing applied in the present invention are shown in Figs. 5 and 6 for the embodiments of Figs.3 and 4. A series of terraces 24 are formed in the upper surface 23 of the disk 2, for example by casting, machining or pressing. The mechanism used is chosen according to the material properties, some being easier to machine or cast. Pressing and welding on terracing involves more process steps and potential issues with the integrity of the weld at typical operating temperatures make this option less preferred. The terracing 24 helps to ensure that the protective layer 22 of solidified slag is formed at the start of operation and remains in place and does not slip off during slag granulation. The number of terraces 24 is dependant upon the diameter of the disk 2 and optionally, each of the terraces is arranged to have equal areas in plan view, resulting in the terraces being closer together at larger radii where the forces tending to remove the slag layer are greater. Use of terracing aids in the formation and retention of a protective slag layer on the dish surface, which helps to reduce damage due to thermal shock and therefore leads to increased service life. Although not illustrated here, the terracing may be used on an otherwise substantially flat rotating disk, such as that shown in Fig.2, or the surface of the disk could be roughened, or provided with protruding tags to slow the first slag that impacts on the metal surface, enough that the cooling effect forms the protective layer.

## Claims

1. A dry slag rotary atomising granulator comprising a rotatable disk mounted on a support for rotation about an axis of rotation, wherein the granulator further comprises a cooling system for supplying a coolant to the disk; wherein the disk comprises a first surface to receive slag and a second surface remote from the slag receiving first surface for receiving coolant; wherein the disk comprises a metal; and wherein the disk further comprises terracing on the first surface; and a layer of solidified slag formed on the first surface.

2. A granulator according to claim 1, wherein the granulator further comprises a slag supply outlet for supplying slag onto the first surface of the disk.

3. A granulator according to claim 2, wherein the slag supply outlet is an outlet of a slag runner or tundish.

4. A granulator according to any of claims 1 to 3, wherein the cooling system comprises coolant sprays directed at the second surface of the disk remote from the first surface.

5. A granulator according to claim 4, wherein the coolant sprays comprise water sprays.

6. A granulator according to any of claims 1 to 3, wherein the cooling system comprises a flowing coolant system.

7. A granulator according to claim 6, wherein the granulator further comprises a housing, the housing comprising a cylinder coupled to an annular disk and mounted relative to the second surface, such that the cylinder and annular disk form an annular passage for containing a flow of coolant.

8. A granulator according to any preceding claim, wherein the granulator further comprises a sump.

9. A granulator according to any preceding claim, wherein the coolant comprises water.

10. A granulator according to any preceding claim, wherein the first surface of the disk is concave.

11. A granulator according to claim 10, wherein an extension of a chord between two points on the circumference of the disk, the chord passing through the axis of rotation, forms an acute angle with a tangent of the disk surface at the edge of the disk pointing towards the axis of rotation.

12. A granulator according to claim 11, wherein the acute angle is between 30° and 50°.

13. A granulator according to claim 12, wherein the acute angle is 40°.

14. A method of operating a dry slag rotary atomising granulator comprising a rotatable disk mounted on a support for rotation about an axis of rotation; wherein the granulator further comprises a cooling system for supplying a coolant to the disk; wherein the disk further comprises a first surface to receive slag and a second surface remote from the first surface for receiving coolant; wherein the disk comprises a metal; and wherein the disk has terracing on the first surface; the method comprising supplying slag to the first surface of the disk; supplying coolant to the second surface of the disk, remote from the slag receiving first surface; forming a layer of solidified slag on the first surface; retaining the layer of solidified slag on the terracing; and continuing to supply slag to the first surface for atomising.

15. A method according to claim 14, comprising causing coolant to exit an annular passage at the circumference of the disk; and collecting the coolant in a sump.

## Patentansprüche

1. Trockenschlacke-Rotationszerstäubungsgranulator, umfassend eine drehbare Scheibe, die auf einem Träger zur Drehung um eine Drehachse befestigt ist, wobei der Granulator ferner ein Kühlsystem zum Zuführen eines Kühlmittels zu der Scheibe umfasst; wobei die Scheibe eine erste Oberfläche zum Aufnehmen von Schlacke und eine zweite Oberfläche, die von der Schlacke-aufnehmenden ersten Oberfläche abgewandt ist, zum Aufnehmen von Kühlmittel umfasst; wobei die Scheibe ein Metall umfasst; und wobei die Scheibe ferner Terrassierung auf der ersten Oberfläche; und eine Schicht von erstarrter Schlacke, die auf der ersten Oberfläche gebildet ist, umfasst.

2. Granulator gemäß Anspruch 1, wobei der Granulator ferner einen Schlackezufuhr-Auslass zum Zuführen von Schlacke auf die erste Oberfläche der Scheibe umfasst.

3. Granulator gemäß Anspruch 2, wobei der Schlackezufuhr-Auslass ein Auslass einer Schlackerinne oder eines Zwischenbehälters ist.

4. Granulator gemäß einem der Ansprüche 1 bis 3, wobei das Kühlsystem Kühlmittelsprühvorrichtungen umfasst, die auf die zweite Oberfläche der Scheibe, die von der ersten Oberfläche abgewandt ist, gerichtet sind.

5. Granulator gemäß Anspruch 4, wobei die Kühlmittelsprühvorrichtungen Wassersprühvorrichtungen umfassen.

6. Granulator gemäß einem der Ansprüche 1 bis 3, wobei das Kühlsystem ein System mit fließendem Kühlmittel umfasst.

7. Granulator gemäß Anspruch 6, wobei der Granulator ferner ein Gehäuse umfasst, wobei das Gehäuse einen Zylinder umfasst, der an eine ringförmige Scheibe gekoppelt und relativ zu der zweiten Oberfläche angebracht ist, so dass der Zylinder und die ringförmige Scheibe einen Ringdurchlass zum Enthalten eines Flusses von Kühlmittel bilden.

8. Granulator gemäß einem der vorstehenden Ansprüche, wobei der Granulator ferner einen Sammelbehälter umfasst.

9. Granulator gemäß einem der vorstehenden Ansprüche, wobei das Kühlmittel Wasser umfasst.

10. Granulator gemäß einem der vorstehenden Ansprüche, wobei die erste Oberfläche der Scheibe konkav ist.

11. Granulator gemäß Anspruch 10, wobei eine Verlängerung einer Sehne zwischen zwei Punkten an dem Umfang der Scheibe, wobei die Sehne durch die Drehachse verläuft, einen spitzen Winkel mit einer Tangente der Scheibenoberfläche an dem Rand der Scheibe, die zu der Drehachse zeigt, bildet.

12. Granulator gemäß Anspruch 11, wobei der spitze Winkel zwischen 30° und 50° beträgt.

13. Granulator gemäß Anspruch 12, wobei der spitze Winkel 40° beträgt.

14. Verfahren zum Betreiben eines Trockenschlacke-Rotationszerstäubungsgranulators, der eine drehbare Scheibe, die auf einem Träger zur Drehung um eine Drehachse befestigt ist, umfasst; wobei der Granulator ferner ein Kühlsystem zum Zuführen eines Kühlmittels zu der Scheibe umfasst; wobei die Scheibe ferner eine erste Oberfläche zum Aufnehmen von Schlacke und eine zweite Oberfläche, die von der ersten Oberfläche abgewandt ist, zum Aufnehmen von Kühlmittel umfasst; wobei die Scheibe ein Metall umfasst; und wobei die Scheibe Terrassierung auf der ersten Oberfläche aufweist; wobei das Verfahren Zuführen von Schlacke zu der ersten Oberfläche der Scheibe; Zuführen von Kühlmittel zu der zweiten Oberfläche der Scheibe, die von der Schlacke-aufnehmenden ersten Oberfläche abgewandt ist; Bilden einer Schicht von erstarrter Schlacke auf der ersten Oberfläche; Zurückhalten der Schicht von erstarrter Schlacke auf der Terrassierung; und Fortsetzen des Zuführens von Schlacke zu der ersten Oberfläche zum Zerstäuben umfasst.

15. Verfahren gemäß Anspruch 14, umfassend Bewirken, dass Kühlmittel aus einem Ringdurchlass an dem Umfang der Scheibe austritt; und Sammeln des Kühlmittels in einem Sammelbehälter.

## Revendications

1. Granulateur rotatif de scories à sec et à atomisation, comprenant un disque rotatif monté sur un support en vue d'une rotation autour d'un axe de rotation, dans lequel le granulateur comprend en outre un système de refroidissement destiné à fournir un fluide de refroidissement au disque ; dans lequel le disque comprend une première surface destinée à recevoir des scories et une seconde surface éloignée de la première surface de réception de scories et destinée à recevoir le fluide de refroidissement ; dans lequel le disque comprend un métal ; et dans lequel le disque comprend en outre un agencement en gradins sur la première surface ; et une couche de scories solidifiées formée sur la première surface.

2. Granulateur selon la revendication 1, le granulateur comprenant en outre une sortie d'alimentation en scories, destinée à fournir des scories sur la première surface du disque.

3. Granulateur selon la revendication 2, dans lequel la sortie d'alimentation en scories est une sortie de canal ou de panier de coulée de scories.

4. Granulateur selon l'une quelconque des revendications 1 à 3, dans lequel le système de refroidissement comprend des pulvérisateurs de fluide de refroidissement dirigés vers la seconde surface du disque, éloignée de la première surface.

5. Granulateur selon la revendication 4, dans lequel les pulvérisateurs de fluide de refroidissement comprennent des pulvérisateurs d'eau.

6. Granulateur selon l'une quelconque des revendications 1 à 3, dans lequel le système de refroidissement comprend un système à circulation de fluide de refroidissement.

7. Granulateur selon la revendication 6, dans lequel le granulateur comprend en outre un logement, le logement comprenant un cylindre accouplé à un disque annulaire et monté par rapport à la seconde surface, de manière que le cylindre et le disque annulaire forment un passage annulaire destiné à contenir un écoulement de fluide de refroidissement.

8. Granulateur selon l'une quelconque des revendications précédentes, dans lequel le granulateur comprend en outre un puisard.

9. Granulateur selon l'une quelconque des revendications précédentes, dans lequel le fluide de refroidissement comprend l'eau.

10. Granulateur selon l'une quelconque des revendications précédentes, dans lequel la première surface du disque est concave.

11. Granulateur selon la revendication 10, dans lequel un prolongement de corde entre deux points à la circonférence du disque, la corde passant par l'axe de rotation, forme un angle aigu avec une tangente de la surface de disque, au bord du disque pointant vers l'axe de rotation.

12. Granulateur selon la revendication 11, dans lequel l'angle aigu est compris entre 30° et 50°.

13. Granulateur selon la revendication 12, dans lequel l'angle aigu est de 40°.

14. Procédé d'utilisation d'un granulateur rotatif de scories à sec et à atomisation, comprenant un disque rotatif monté sur un support en vue d'une rotation autour d'un axe de rotation, dans lequel le granulateur comprend en outre un système de refroidissement destiné à fournir un fluide de refroidissement au disque ; dans lequel le disque comprend en outre une première surface destinée à recevoir des scories et une seconde surface éloignée de la première surface et destinée à recevoir le fluide de refroidissement ; dans lequel le disque comprend un métal ; et dans lequel le disque présente un agencement en gradins sur la première surface ; le procédé comprenant les étapes consistant à fournir les scories sur la première surface du disque ; fournir le fluide de refroidissement sur la seconde surface du disque, éloignée de la première surface de réception de scories ; former une couche de scories solidifiées sur la première surface ; retenir la couche de scories solidifiées sur l'agencement en gradins ; et continuer à fournir des scories sur la première surface à des fins d'atomisation.

15. Procédé selon la revendication 14, comprenant l'étape consistant à faire sortir le fluide de refroidissement par un passage annulaire à la circonférence du disque ; et l'étape consistant à collecter le fluide de refroidissement dans un puisard.
